# EUROPEAN PATENT APPLICATION

(11) **EP 1 130 810 A2**
(43) Date of publication of application: **05.09.2001**
(21) Application number: 01101149.1
(22) Date of filing: 22.01.2001
(51) Int. Cl.: H04B 10/105

(54) **A shared-optical satellite acquisition and tracking system**

(30) Priority: 21.02.2000 US 510981
(71) Applicant: TRW Inc., Redondo Beach, California 90278 (US)
(72) Inventor: Delong, Raymond K., Palos Verdes Estates, CA 90274 (US)
(74) Representative: Schmidt, Steffen J., Dipl.-Ing.

(57) **Abstract**

A receive system for acquiring, tracking and receiving a received signal includes an acquisition/track beamsplitter which is configured to divide the received signal into an acquisition/track signal and a communications signal. An acquisition/track path is provided having an acquisition/track optical member. The acquisition/track optical member has a field of view over which the optical member can focus and is operable to focus a signal which is incident at an incident angle upon the optical member at a position within the field of view correspondingly related to the incident angle of the signal. Acquisition and tracking sensors are positioned within the field of view of the acquisition/track optical member.

A steering mechanism is provided and is positioned to direct the acquisition/track signal towards the acquisition/track optical member at a preselected first incident angle so that the acquisition/track signal is focused by the acquisition/track optical member onto the primary acquisition sensor. The steering mechanism is rotatable to change the angle at which the acquisition/track signal is incident upon the optical member and redirect the acquisition/track signal at a preselected second incident angle so that the acquisition/track signal is focused onto the tracking sensor.

## Description

### BACKGROUND OF THE INVENTION

### Field of the Invention

The present invention relates generally to communication systems and, more particularly, to a redundant system for receiving, acquiring and tracking a transmitted signal.

### Description of the Prior Art

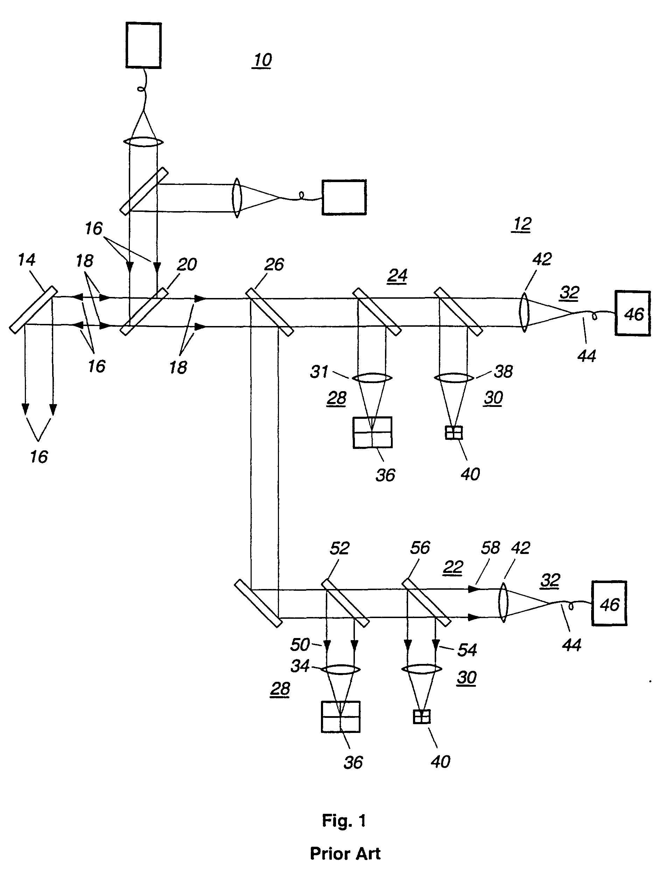

Referring to FIG. 1, transmit 10 and receive 12 systems are used for satellite communications to pass data from one satellite to another satellite. Typically, each satellite has both a transmit 10 and a receive 12 system. As such, the transmit 10 and receive 12 systems can be configured as totally separate systems or can share some components. For example, the transmit 10 and receive 12 systems of Fig. 1 share a pointing mechanism 14 which directs the transmitted signal towards the other satellite, as depicted by the arrows marked 16, and also directs the received signal towards the receive electronics, as depicted by the arrows marked 18. To do so, a transmit/receive splitter 20 is placed in the path of the signals 16, 18 and is operative to reflect the transmit signal 16 and pass the receive signal 18.

A typical receive system includes both primary 22 and redundant 24 strings of receiver electronics and components. The receive system 12 is initially configured to use only the primary receive path 22. To do so, the receive signal 18 is directed towards the primary receive string 22 by the removable mirror 26. If any component in the primary string 22 fails, the primary string 22 is switched out and the redundant string 24 is switched in by removing the removable mirror 26.

For communications with laser signals (herein referred to as Lasercom), each string 22, 24 typically includes an acquisition path 28 used to acquire the received signal 18, a track path 30 used to track the receive signal 18 and a receive path 32 used to process the data contained in the receive signal 18. Each acquisition path 28 uses an acquisition optical member 34, such as a lens or reflector, and an acquisition sensor 36. Each track path 30 includes a tracking optical member 38 and a track sensor 40; and, each receive path 32 includes a receive optical member 42 and a receive fiber 44 coupled to primary 46 and redundant 48 receive electronics, respectively.

One disadvantage of this prior art receive system 12 is that it requires a folding mirror 26 to switch from directing the receive signal 18 towards the primary receive path 22 to directing the receive signal 18 towards the redundant receive path 24. This requires a moveable mechanism 26 which is expensive, can fail and extracts a weight penalty when the receive system 12 is disposed on a satellite.

A second disadvantage of the prior art receive system 12 is that it requires a full primary 22 and redundant 24 string of receive electronics and components. These fully redundant strings 22, 24 are costly and extract a weight penalty. In addition, a failure of one component in the primary receive string 22 necessitates switching out of every component in the failed string 22 and switching in the entire redundant string 24. This results in non-failed components being switched out with the failed component. This redundancy scheme, therefore, forgoes the usefulness of some of the non-failed components and is not very robust since a single failed component in the primary string 22 causes each component in the primary string 22 to be unusable.

In operation, the receive signal 18 is directed towards the primary string 22 by the splitter 20. Within the primary string 22, a first portion 50 of the receive signal 18 is coupled off by a beamsplitter 52 and directed towards the acquisition optical member 34 and acquisition sensor 36. A second portion 54 of the receive signal 18 is coupled off by a second beamsplitter 56 and is directed towards the tracking optical member 58 and track sensor 40. The remainder of the receive signal 18 is directed towards the receive optical member 42, primary receive fiber 44 and associated primary receive electronics 46.

One disadvantage of this prior art system is that two portions 50, 52 of the receive signal 18 must be coupled off from the receive signal 18 for the acquisition and tracking functions. This results in a lower signal level of the remaining receive signal 58 coupling into the receive path 32 requiring more costly, higher sensitivity receive electronics 46 and/or more powerful power amplifiers on the transmitting satellite which are costly and extract a weight penalty. What is needed therefore is a receive system 12 in which a folding mirror 26 is not required to switch between the primary 22 and redundant 24 receive strings, does not require switching out of non-failed components, minimizes the number of components and minimizes the portions of the receive signal 18 used for the acquisition and tracking functions.

### SUMMARY OF THE INVENTION

The preceding and other shortcomings of the prior art are addressed and overcome by the present invention which provides a high reliability, satellite transmit and receive system for acquiring and tracking a received signal and transmitting a collimated transmit signal towards a preselected destination location.

In a first aspect, the system comprises an acquisition/tracking path having an acquisition/track optical member and primary acquisition and track sensors. The acquisition/track optical member has a field of view over which the optical member can focus and is operable to focus a signal which is incident upon the optical member at a position within the field of view corresponding to the incident angle of the signal. The primary acquisition and track sensors are positioned at preselected locations within the field of view of the acquisition/track optical member.

A beamsplitter is positioned to divide the receive signal into an acquisition/track signal and a communications signal and direct the acquisition/track signal towards the acquisition/track path. A steering mechanism is provided and positioned to direct the receive signal towards the beamsplitter at a preselected first incident angle so that the acquisition/track signal is focused by the acquisition/track optical member onto the primary acquisition sensor. The steering mechanism is rotatable to change the angle of the receive signal so as to redirect the acquisition/track signal at a preselected second incident angle so that the acquisition/track signal is focused onto the track sensor.

In a second aspect, redundant acquisition and track sensors are additionally positioned at preselected locations within the field of view of the acquisition/track optical member and the steering mechanism is rotatable to change the angle of the receive signal so as to redirect the acquisition/track signal so that the acquisition/track signal can be focused on any selected one of the sensors.

In a third aspect, the communications path comprises a communications optical member having a field of view over which the communications optical member can focus and is operable to focus a signal which is incident upon the communications optical member at a position within the field of view corresponding to the incident angle of the signal. Primary and redundant optical fibers are provided each of which have a first and a second end. The first end of each of the primary and redundant fibers is positioned at first and second preselected location, respectively, within the field of view of the communications optical member. Primary and redundant receive electronics are coupled to the second end of the primary and redundant fibers, respectively. Each fiber is operative to propagate a signal incident upon the first end of the fiber.

The steering mechanism is configured to direct the receive signal at a preselected angle towards the beamsplitter so that the communications signal is focused on the first end of the primary fiber when the acq/track signal is focused on the primary track sensor. The steering mechanism is configured to rotate the angle at which the receive signal is directed to selectively change the angle of the acquisition/track and the communications signals so that the communications signal will be focused on the first end of the redundant fiber when the acquisition/track signal is focused on the redundant track sensor.

In a fourth aspect, the transmit path comprises primary and redundant signal generators which are operative to generate primary and redundant generated transmit signals, respectively. Primary and redundant collimated transmit signals are generated from the primary and redundant generated signals, respectively. The primary and redundant collimated signals are directed in first and second directions, respectively.

A point ahead mechanism is positioned to intercept the collimated signals and redirect the primary collimated transmit signal towards the steering mechanism at an angle which is selected so that the transmit signal will be reflected towards the preselected destination location by the steering mechanism at a preselected angle. The point ahead mechanism is operative to switch from directing the primary collimated transmit signal towards the steering mechanism to directing the redundant collimated transmit signal towards the steering mechanism.

In a fifth aspect, the present invention provides a method for receiving, acquiring and tracking a received signal, and transmitting a collimated transmit signal towards a preselected destination location. The received signal is split into an acquisition/track signal and a communications signal. An acquisition/track optical member is provided having a field of view over which the optical member can focus. Acquisition and track sensors are positioned at preselected locations within the field of view of the optical member. The acquisition/track signal is directed to illuminate the optical member at a preselected first angle so that the acquisition/track signal is focused on the acquisition sensor. Once the acquisition function is complete, the acquisition/track signal is directed to illuminate the optical member at a preselected second angle so that the acquisition/track signal is focused on the track sensor.

In a sixth aspect, primary and redundant acquisition and track sensors are positioned at preselected positions in the field of view of the acquisition/track optical member. A communications optical member is provided having a field of view over which the optical member can focus. A first end of a primary and a redundant optical fiber are positioned at first and second preselected locations, respectively, within the field of view of the communications optical member. A second end of the primary and redundant optical fibers are coupled to primary and redundant receive electronics, respectively. The communications signal is directed to illuminate the communications optical member at a preselected first angle so that the communications signal focuses on the first end of the primary optical fiber and propagate through the primary fiber to the primary receive electronics when the acquisition/track signal focuses on the primary track sensor. When the acquisition/track signal is redirected towards the redundant track sensor, the communications signal is simultaneously redirected to illuminate the communications optical member at a preselected second angle so that the communications signal focuses on the first end of the redundant optical fiber when the acquisition/track signal focuses on the redundant track sensor.

In an seventh aspect, a transmit optical member is provided having a focal plane. Primary and redundant transmit signals are generated and are radiated from first and second positions near the focal plane of the transmit optical member. The transmit optical member is illuminated by the radiated signals which collimates the radiated signals and directs the collimated signals in first and second directions, respectively. A selected one of the collimated transmit signals is redirected towards the preselected destination location.

In an eighth aspect, a calibration mechanism is included in the system and is configured to calibrate the transmit path to the receive path.

### BRIEF DESCRIPTION OF THE DRAWINGS

Reference is now made to the detailed description of the preferred embodiments illustrated in the accompanying drawings, in which:
FIG. 1 is a schematic drawing of a redundant transmit/receive system in accordance with the prior art;
FIG. 2 is a schematic drawing of a redundant transmit/receive system in accordance with a first embodiment of the present invention;
FIG. 3a is a schematic drawing of the acquisition/track and communications paths of FIG 2 depicting the primary acquisition function;
FIG. 3b is a schematic drawing of the acquisition/track and communications paths of FIG. 2 depicting the primary tracking function and the primary communications function;
FIG. 3c is a schematic drawing of the acquisition/track and communications paths of FIG. 2 depicting the redundant tracking function and the redundant communications function;
FIG. 4 is a schematic drawing of the transmit path of FIG. 2; and,
FIGs. 5a - 5d are schematic drawings depicting the calibration mode in accordance with another embodiment of the invention.

### DETAILED DESCRIPTION OF THE PREFERRED EMBODIMENTS

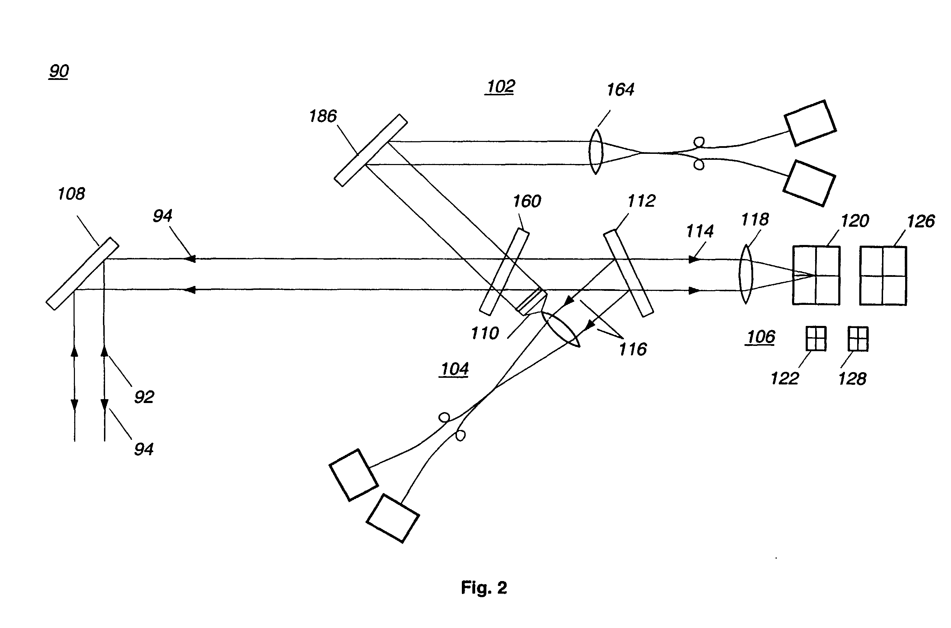

Referring to FIG. 2, a robust transmit/receive system 90 for receiving a receive signal 92 and transmitting a transmit signal 94 which reuses the energy used for the acquisition function for the track function so as to provide more of the received signal for the communications function is depicted. The system 90 additionally provides for switching between primary and redundant sensors and receivers free of a removable mirror, provides redundancy for only the components having a high likelihood of failure and limits the switching-out of good components with failed components.

The transmit/receive system 90 includes a transmit path 102, a communications path 104 and an acquisition/tracking path 106 which share a steering mechanism 108, preferably a fine track mechanism 108, to save spacecraft weight. Alternatively, each path 102, 104 and 106 could be configured as separate systems. A calibration mechanism 110 is included in the system and is used to calibrate the transmit path to the receive path and in particular, the acquisition/track path 106.

The received signal, depicted by the arrows marked 92, is incident on the fine track mechanism 108 which directs the receive signal 92 towards the acquisition/track beamsplitter 112 which divides or splits the received signal 92 into an acquisition/track signal 114 and a communications signal 116. The beamsplitter 112 is configured to direct the acquisition/track signal 114 towards the acquisition/track path 106 and the communications signal 116 towards the communications path 104. The configuration of the beamsplitter 112 is dependant on the composition of the received signal 92 and the communications and tracking technique used. For example, a multi-frequency tracking technique could be used in which a signal of a first frequency is used for the acquisition/track function and a signal of a second frequency is used for the communications function. For such a technique, the received signal 92 would comprise a signal component at the first frequency and a signal component at the second frequency. The beamsplitter 112 would be configured as a dichroic beamsplitter 112 which passes signals having the first frequency and reflects signals having the second frequency. As such, the first frequency signal component passes through the dichroic beamsplitter 112, enters the acquisition/track path 106 and becomes the acquisition/track signal 114. The second frequency signal component reflects from the beamsplitter 112 and is directed towards the communications path 104 and becomes the communications signal 116.

Alternatively, the beamsplitter 112 is configured to couple off a portion of the received signal 92 and use that portion of the receive signal for the acquisition/track function. The remaining portion of the receive signal is then used for the communications function. For example, 20% of the received signal 92 could be used for the acquisition/track function leaving 80% of the received signal 92 for the communications function.

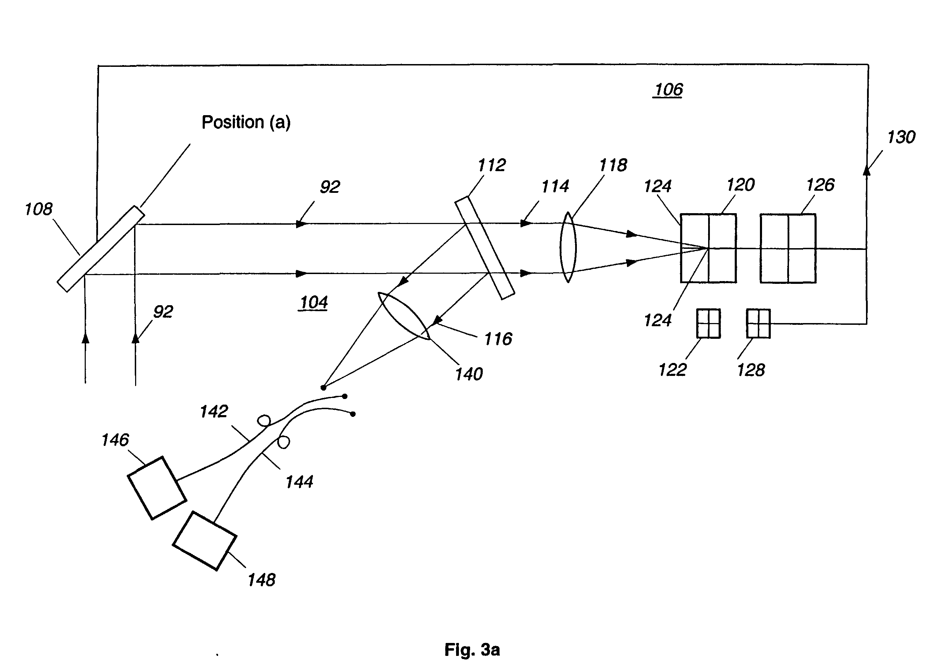

For ease of explanation, the communications path 104 and the acquisition/track path 106 are shown separate from the transmit path 102 in FIGs. 3a - 3c for a first embodiment of the invention. The operation of the acquisition/track path 106 will be discussed first followed by a discussion of the operation of the communications path 104. The operation of the transmit path 102 and the calibration method used to calibrate the system 90 is discussed thereafter.

Referring now to FIGs 3a - 3c, the acquisition/track path 106 includes an acquisition/track optical member 118, such as a lens or a mirror, which has a field of view over which the optical member 118 can focus. A primary acquisition sensor 120 and a primary tracking sensor 122 are located within field of view of the optical member 118.

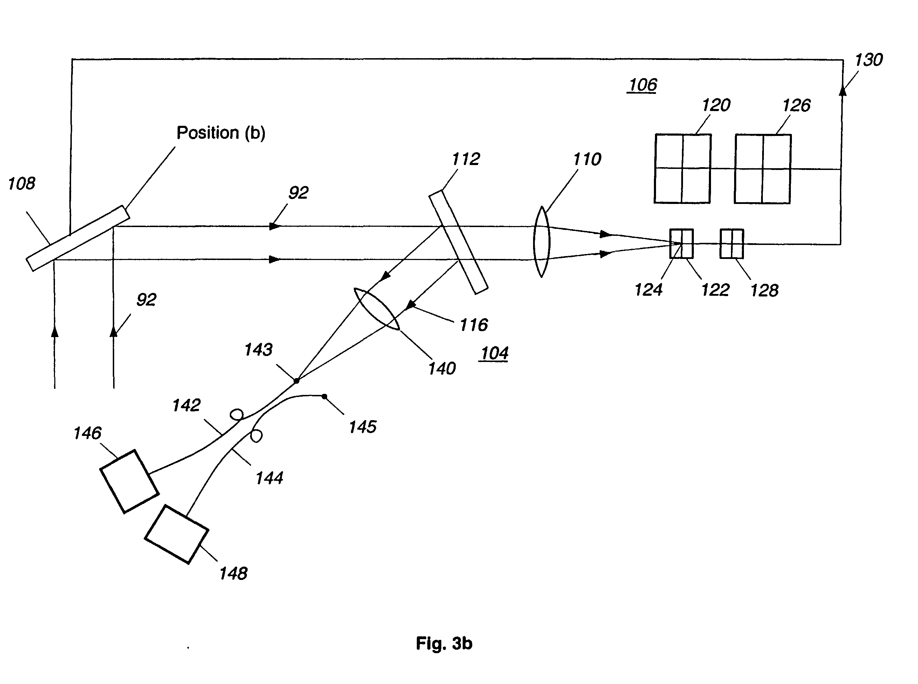

The optical member 118 focuses the acquisition/track signal 114 at a focal point 124, the location of which is dependant on the properties of the optical member 118 as well as the incident angle of the acquisition/track signal 114. As is known to one skilled in the art, the location of the focal point 124 correlates to the angle at which the optical member 118 is illuminated by a signal 114. The focal point 124 can thus be selectively positioned and selectively moved by changing the angle at which the acquisition/track signal 114 is incident upon the optical member 118. As such, the acquisition/track signal 114 can be selectively focused onto. either the primary acquisition sensor 120 or onto the primary tracking sensor 122 as shown in FIGs. 3a & 3b, respectively. To do so, for the preferred embodiment of the invention, the fine track mechanism 108 directs the received signal 92 towards the beamsplitter 112 at a preselected angle. The angle is selected so that the acquisition/track signal 114 illuminates the acquisition/track optical member 118 at the proper angle to focus the energy at the desired position. As such, when acquisition is desired, the fine track mechanism 108 is positioned to position (a) (FIG. 3a) which focuses the acquisition/track signal 114 onto the primary acquisition sensor 120. When tracking is desired, the fine track mechanism 108 is positioned to position (b) (FIG. 3b) which focuses the acquisition/track signal 114 onto the primary tracking sensor 122. This is typically not a burden on the fine track mechanism 108 since the fine track mechanism 108 is typically designed to provide at least 10 milliradians of tracking and directing the acquisition/track signal 114 between the primary acquisition 120 and the primary track 122 sensors requires only a few milliradians of adjustment from the fine track mechanism 108.

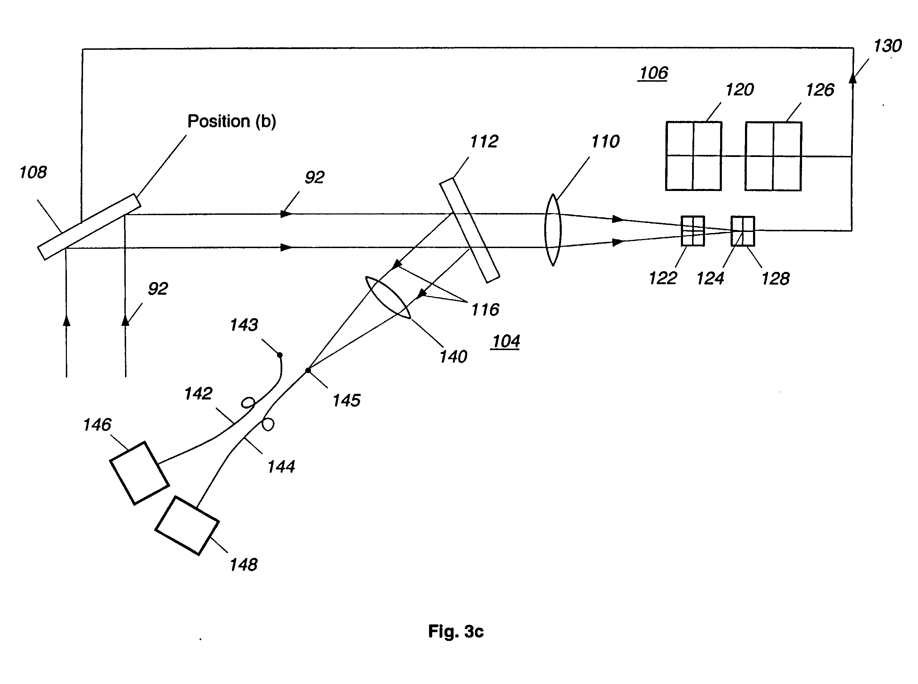

It is typically desirable for spacecraft applications to provide redundancy for components which are most likely to fail. Optical members 118 don't typically fail but sensors 120, 122 do. As such, it may be desirable to provide redundant acquisition 126 and track 128 sensors to the acquisition/track path 106 to improve the overall reliability of the system. As shown in FIG. 3, redundant sensors 126, 128 can be added to the acquisition/track path 106 without adding a redundant optical member 118. To do so, the redundant sensors 126, 128 are positioned within the field of view of the optical member 118. The acquisition/track signal 114 can be focused on any one of the sensors 120, 122, 126, 128 by selective positioning of the fine track mechanism 108 to illuminate the optical member 118 at the correct angles to focus the acquisition/track signal 114 on the preselected sensor 120, 122, 126, 128 in the manner described above. As such, a user can switch between primary 120, 122 and redundant 126, 128 acquisition and tracking sensors, respectively, free of a removable mirror and without having to provide a redundant optical member 118.

To complete the acquisition function requires focusing the acquisition/track signal 114 at or near the center of an acquisition sensor 120, 126. Each sensor 120, 122, 126, 128 typically contains four separate detectors which are physically placed as close together as possible and each measure incident energy. To complete the acquisition function requires balancing the focused energy 124 onto all four detectors of one of the acquisition sensors 120 or 126 by positioning the focal point 124 so as to simultaneously illuminate all four detectors of one acquisition sensor 120 or 126 with the same amount of energy. This position will herein be referred to as the center position. Each acquisition sensor 120, 126 contains electronics which sense the position of the focused energy 124 and generates a positioning signal 130. This positioning signal 130 is coupled into the fine track mechanism 108 and is used to adjust the position of the fine track mechanism 108. The fine track mechanism 108 is responsive to the positioning signal 130 and is operative to change the angle at which the receive signal 92 is directed so that the acquisition/track signal 114 is incident upon the optical member 118 from a different angle. Sensing the position of the focused acquisition/track signal 124, feeding back a control signal 130 and adjusting the position of the fine track mechanism 108 is continued until the focused energy 124 is positioned correctly on one of the acquisition sensors 120, 126. When this occurs, a successful acquisition has been completed.

Once the acquisition function is completed, the track function must be completed. To do so, the fine track mechanism 108 is repositioned to focus the acquisition/track signal 114 onto one of the track sensors 122, 128. To track the acquisition/track signal 114 requires positioning the focused energy 124 at a center position on the selected track sensor 126, 128. Each track sensor 122, 128 contains electronics which sense the position of the focused energy 124 and generates a positioning signal 130. This positioning signal 130 is used to adjust the position of the fine track mechanism 108. The process of sensing the position of the focused energy 124, feeding back a control signal 130 an adjusting the position of the fine track mechanism 108 is continued until the focused energy 124 is centered on one of the track sensors 122, 128.

Referring now to the communications path 104, the beamsplitter 112 is configured to direct the communications signal 116 towards the communications path 104. The communications path 104 can include any communications equipment known to one skilled in the art to receive and process the communications signal 116. For example, as shown in FIG. 1, the communications path can include separate primary 22 and redundant 24 receive strings. However, for the preferred embodiment of the invention, the communications path 104 includes a communications optical member 140, primary 142 and redundant 144 communications optical fibers and primary 146 and redundant 148 communications electronics. A first end 143, 145 of each of the primary 142 and redundant 144 fibers is positioned at a preselected location within the field of view of the optical member 140. A second end of each fiber 142, 144 is coupled to communications electronics 146, 148, respectively.

As previously mentioned, the position of a signal focused by an optical member 140 is dependant on the incident angle of the signal to be focused. As such, in operation, the fine track mechanism 108 is positioned so that the communications signal 116 is directed onto the optical member 140 at the proper angle so that the optical member 140 focuses the signal 114 onto the first end 143 of the primary fiber 142. As is known to one skilled in the art, a fiber optic cable 142 will propagate a signal coupled into the end 143 of the cable 142. As such, a signal focused on the end 143 of the primary fiber 142 will be propagated towards to the primary communications electronics 146. And, a signal focused on the end 145 of the redundant fiber 144 will propagate the signal to the redundant communications electronics 148

For the preferred embodiment of the invention, the system 92 (FIG. 2) is configured so that the direction at which both the communication signal 116 and the acquisition/track signal 114 are directed towards the communications 140 and acquisition/track 118 optical members, respectively, is controlled by the point ahead mechanism 108. As such, redirecting the point ahead mechanism 108 to focus the acquisition/track signal 114 onto each sensor 120, 122, 124, 126 also redirects the direction of the communications signal 116. As such, the fine track mechanism 108, acquisition/track beamsplitter 112, communications optical member 140 and fiber ends 143, 145 are positioned so that the communications signal 116 will focus onto the first end 143 of the primary fiber 142 when the acquisition/track signal 114 is focused on the primary track sensor 122 and will focus on the end 145 of the redundant fiber 144 when the acquisition/track signal 114 is focused on the redundant track sensor 128.

To do so, for the preferred embodiment of the invention, the track sensors 122, 128, first ends 143, 145 of the communications fibers 142, 144 and acquisition/track beamsplitter 112 are placed in fixed positions and the fine track mechanism 108 is used to change the angle of the received signal 92 and, as such, change the angle at which the acquisition/track 114 and communications 116 signals are directed by the acquisition/track beamsplitter 112 towards the optical members 118, 140, respectively. As such, to switch from focusing on the primary track sensor 122 and fiber 142 (FIG. 3b) to the redundant track sensor 128 and fiber 144 (FIG. 3c) associated redundant receive electronics 148 simply requires changing the angle at which the fine track mechanism 108 directs the receive signal 92, which in turn changes the direction of both the communications signal 116 and the acquisition/track signal 114 such that the communications signal 116 is focused onto the end of the redundant fiber 144 simultaneous to the acquisition/track signal 144 focusing on the redundant track sensor 128. Note that, as shown in FIG. 3a, the system is configured such that when the acquisition/track signal is focused onto an acquisition sensor 120, 126 the communications signal 116 will not focus onto the end 143, 145 of a fiber 142, 144 and communications will not take place.

Since the direction of the communications 116 and acquisition/track 114 signals are simultaneously dependant on the position of the fine track mechanism 108, the primary communications electronics 146 is tied to the primary track sensor 122 and the redundant communications electronics 148 is tied to the redundant track sensor 128. As such, the track sensors 126, 128 and communications electronics 146, 148 cannot be mixed and matched. For most spacecraft applications, this provides sufficient system reliability; however, if it is desired to improve the reliability of the system, the system can be configured to allow mixing and matching of the track sensors 122, 128 with any communications electronics 146, 148 by adding an additional mirror (not shown) in either the communications path 104 or the acquisition/track path 106 or, by configuring the acquisition/track beamsplitter 112 to direct the communications signal 116 at the proper angle.

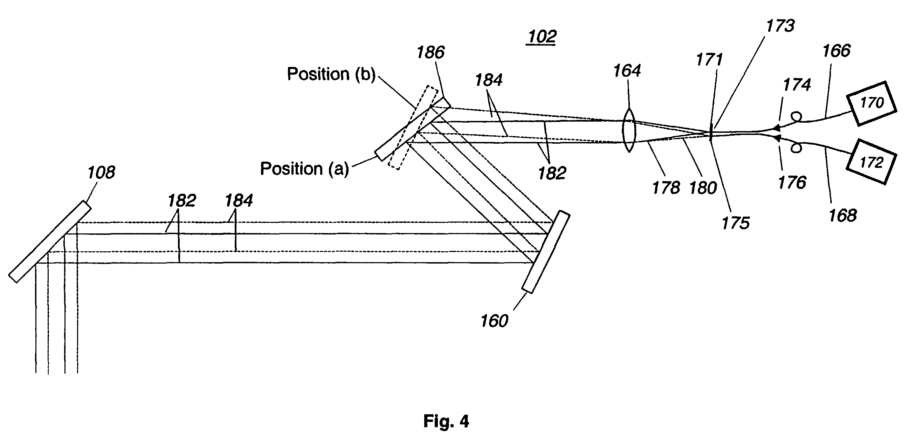

Referring now to FIGs. 2 & 4, for the preferred embodiment of the invention, a transmit path 102 is coupled together with the receive 104 and acquisition/track 106 paths to provide a high reliability combination transmit/receive system 90. To do so, a transmit/receive beamsplitter 160 is added to the system 90 and is configured to direct the receive signal 92 towards the acquisition/track beamsplitter 112 and direct transmit signal 182 or 184 towards the fine track mechanism 108. For the preferred embodiment of the invention, a calibration mechanism 110 is positioned in the system 90 and is used during a calibration mode to calibrate the transmit path 102 to the receive path 104, and, in particular, the acquisition/track path 106. The operation of the transmit path 102 will be detailed first followed by a discussion of the calibration mode.

The transmit path 102 can comprise any transmit electronics or transmit configuration known to one skilled in the art, but preferably includes a transmit optical member 164, primary 166 and redundant 168 transmit fibers and primary 168 and redundant 170 transmit electronics. The primary 170 and redundant 172 transmit signal generators are coupled to one end of the primary 166 and redundant 168 optical fibers, respectively. The opposite end of each optical fiber 166, 168 is positioned at first 173 and second 175 preselected locations, respectively, within or near the focal plane of the optical member 164.

The primary 170 and redundant 172 signal generators generate primary 174 and redundant 176 transmit signals which are coupled into the primary 166 and redundant 168 transmit optical fibers, respectively. It is known to one skilled in the art that signals in a lasercom system are transportable by optical fibers 166, 168 and optical fiber components. As such, the primary 166 and redundant 168 transmit signals are transported to the preselected locations 173, 175, respectively, and radiate from the ends of the fibers. The radiated primary and redundant transmit signals are depicted by the solid lines marked 178 and the dashed lines marked 180, respectively. The transmit optical member 164 is positioned so that the primary 178 and redundant 180 radiated transmit signals illuminate the optical member 164 from the preselected locations 173, 175, respectively. The transmit optical member 164 is operative to generate therefrom primary 182 and redundant 184 collimated transmit signals and direct those signals 182, 184 at different angles. As is known to one skilled in the art, signals 174, 176 which originate from different locations within or near the focal plane 171 of an optical member 164 and illuminate the optical member 164 will exit the optical member 164 at different angles. The direction at which the collimated signals 182, 184 exit the optical member 164 is determined by the properties of the optical member 164 and the point of origin of the radiated signals 178, 180.

The collimated transmit signals 182, 184 are incident on a steering mechanism 186, preferably a point ahead mechanism 186, at different angles. The point ahead mechanism 186 is positioned to redirect a selected one of the signals 182 or 184 towards the transmit/receive beamsplitter 160. The point ahead mechanism 186 is typically a steerable mirror 186 but can be any device known to one skilled in the art to redirect a signal in a preselected direction.

Since the primary 184 and redundant 186 collimated signals are incident on the point ahead mechanism 186 at different angles, to select and redirect the primary collimated signal 184 requires positioning the point ahead mechanism 186 at a first position (position (a) depicted by the solid lines) whereas to select and redirect the redundant collimated signal 184 requires positioning the point ahead mechanism 186 at a second position (position (b) depicted by the dashed lines). This is typically not a burden on the point ahead mechanism 186 since the point ahead mechanism 186 is typically designed to provide ten or more milliradians of pointing capability and compensating for the different incident directions of the primary 182 and redundant 184 collimated signals only requires a few milliradians of compensation.

The transmit signals 166, 168 can be generated simultaneously or one at a time and are selected between by selective positioning of the point ahead mechanism 186. The selected transmit signal 182 or 184 is redirected by the point ahead mechanism 186 towards the transmit/receive beamsplitter 160 which redirects the selected transmit signal 182 or 184 towards the fine track mechanism 108. The fine track mechanism 108 directs the selected transmit signal 182 or 184 towards the preselected destination location, typically the location of the receive satellite (not shown) compensated for by the amount of point ahead required. Note that the selected transmit signal 182 or 184 becomes the transmit signal 94 of FIG. 2.

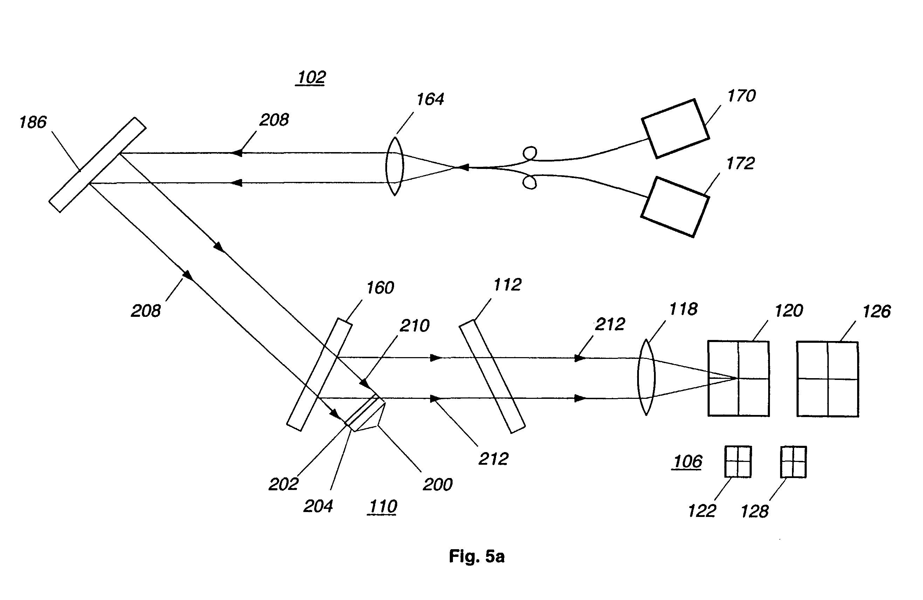

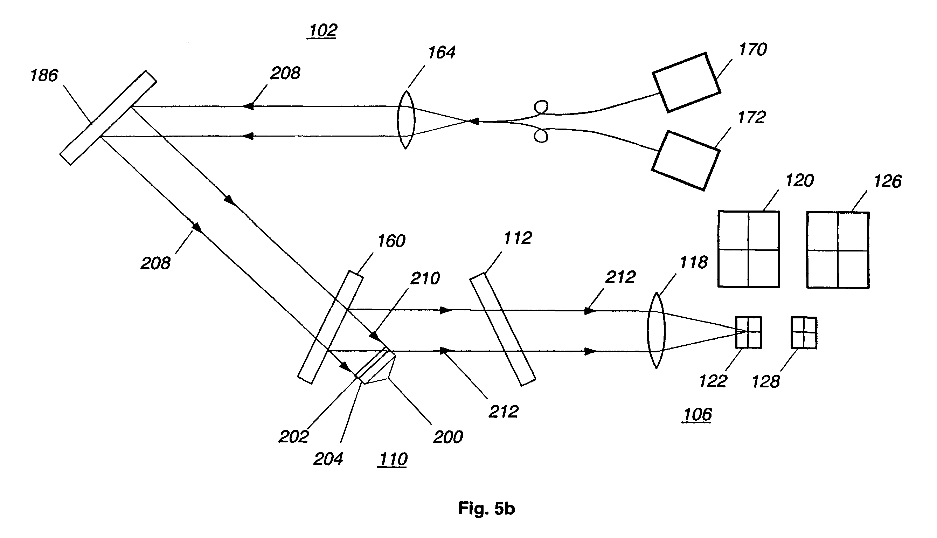

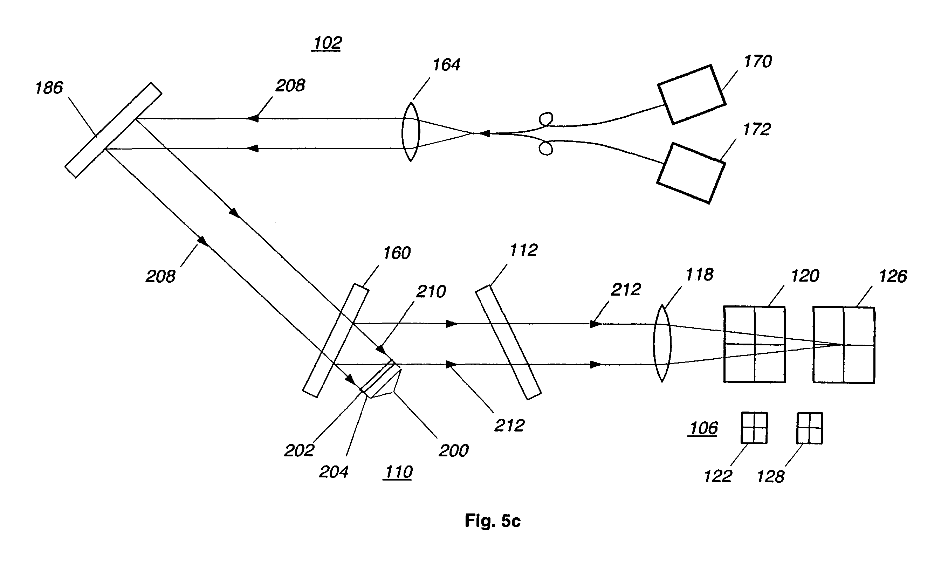

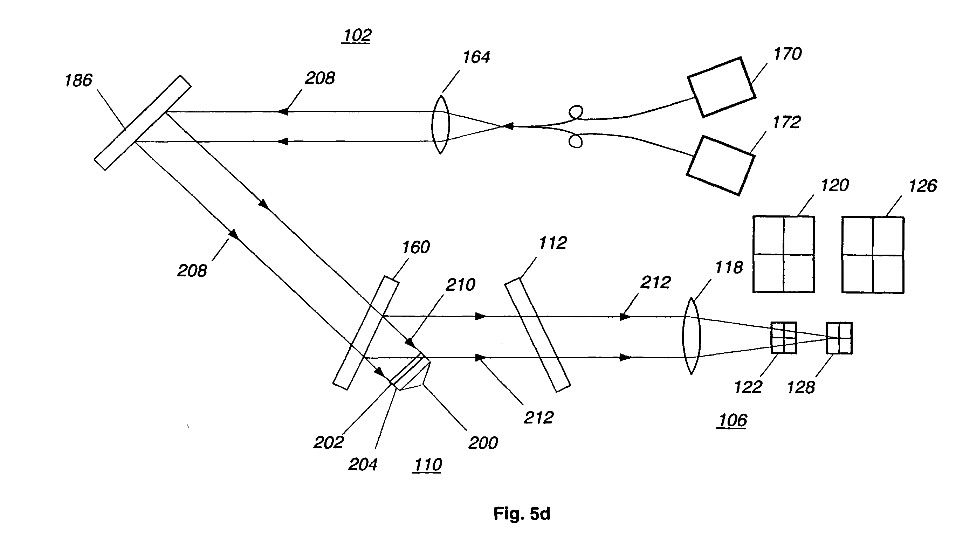

Referring again to FIG. 2, in order to conduct the acquisition and track functions, the receive 92 and transmit 94 signal paths must be coaligned which requires calibrating the system. To do so, referring to FIGs. 5a - 5d, a calibration mechanism 110 is included in the combination transmit/receive system 90 which is used to calibrate the acquisition/track 106 and the transmit 102 paths. The calibration mechanism 110 includes a comer cube 200, an attenuator 202 and a shutter 204. The calibration mechanism 110 is positioned behind the transmit/receive beamsplitter 160. The shutter 204 is place between the corner cube 200 and the transmit/receive splitter 160 and is only opened during the calibration mode. Calibration is typically conducted just prior to acquisition. For calibration, a transmit signal 208 is provided which is redirected towards the transmit/receive beamsplitter 160. A portion 210 of the transmit signal 208 leaks through the transmit/receive beamsplitter and enters the calibration mechanism 110 through the shutter 204. An attenuator 202 is typically required between the shutter 204 and the corner cube 200 to lower the intensity level of the leaked-through transmit signal 210. The leaked through portion 210 of the transmit signal is reflected by the corner cube 200 and is directed back towards the transmit/receive beamsplitter 160. The calibration signal 212 is incident on and reflected by the transmitlreceive beamsplitter 160 and is directed towards the acquisition/track optical member 118. The point ahead mechanism 186 is moved around until the calibration signal 212 focuses on the center of the primary acquisition sensor 120 (FIG. 5a). The position of the point ahead mechanism 186 which corresponds to this focused energy position is noted. The point ahead mechanism 186 is subsequently moved until one at a time, the calibration signal 212 focuses on each sensor 122, 126, 128 as shown in FIGs. 5b - 5d, respectively. The position of the point ahead mechanism 186 is noted each time the calibration signal 212 is focused on the respective sensor 120, 122, 126, 128. The calibration function is completed by noting the angular rotation of the point ahead mechanism required to center the calibration signal on each of the respective sensors 120, 122, 126, 128.

Each noted position of the point ahead mechanism 186 is used for either the acquisition or track function. For example, when acquiring, one of the acquisition positions is used and, when in a track mode, one of the track positions is used. As previously mentioned, in operation, when transitioning from acquisition to track, the point ahead mechanism 186 must be repositioned from an acquisition sensor 120, 126 to a track sensor 122, 128. As such, the fine track mechanism 108 must be counter rotated the same amount as the point ahead mechanism 186 so that both the path of the transmit signal 94 and the receive signal 92 will be coaligned. The noted positions of the point ahead mechanism 186 for each sensor 120, 122, 126, 128 are used to accomplish this function.

The combination transmit/receive shown in FIG. 2 is a very robust, highly reliable system because it allows selective mixing and matching primary 112, 130 and redundant 114, 132 sensors, primary 146 and redundant 148 communications electronics and primary 170 and redundant 172 transmit electronics. As such, the failure of one component will not necessitate switching out optics as is practiced by the prior art configuration of FIG. 1. The configuration of FIG. 2 is particularly useful for lasercom satellite applications requiring extremely high reliability. It will be appreciated by persons skilled in the art that the present invention is not limited to what has been shown and described hereinabove. The scope of the invention is limited solely by the claims which follow.

## Claims

1. A combination transmit/receive system for acquiring, tracking and receiving a received signal and transmitting a collimated transmit signal towards a preselected destination location comprising:
an acquisition/track beamsplitter configured to divide the received signal into an acquisition/track signal and a communications signal;
an acquisition/track path having an acquisition/track optical member and primary acquisition and tracking sensors, said acquisition/track optical member having a field of view over which the optical member can focus and operable to focus a signal which is incident upon the optical member at an incident angle at a position within the field of view correspondingly related to the incident angle of the signal, said primary acquisition and tracking sensors positioned within the field of view of the acquisition/track optical member;
a first steering mechanism positioned to direct the acquisition/track signal towards the acquisition/track optical member at a preselected first incident angle so that the acquisition/track signal is focused by the acquisition/track optical member onto the primary acquisition sensor, the first steering mechanism being rotatable to change the angle at which the acquisition/track signal is incident upon the optical member and redirect the acquisition/track signal at a preselected second incident angle so that the acquisition/track signal is focused onto the tracking sensor;
a communication path configured to receive said communications signal; and
a transmit path comprising:
primary and redundant signal generators which are operative to selectively generate primary and redundant generated transmit signals, respectively;
means for producing primary and redundant collimated transmits signals from the primary and redundant generated signals and radiate the primary and redundant collimated signals at different angles, respectively; and,
a second steering mechanism operable to redirect the primary collimated transmit signal towards the preselected destination location and switch from directing the primary collimated transmit signal towards the preselected destination location to directing the redundant collimated transmit signal towards the preselected destination location.

2. The system of claim 1, further comprising:
a redundant acquisition sensor and a redundant track sensor positioned within the acquisition/track optical member field of view, the first steering mechanism operative to selectively redirect the incident angle at which the acquisition/track signal is incident upon the acquisition/track optical member so that the acquisition/track signal can be focused on any selected one of the tracking and acquisition sensors.

3. The system of claim 2, wherein the communications path comprises:
a communications optical member having a field of view over which the communications optical member can focus and operable to focus a signal which is incident upon the communications optical member at an incident angle at a position within the field of view correspondingly related to the incident angle of the signal;
primary and redundant communications electronics; and,
primary and redundant optical fibers each of which having a first and a second end;
the first end of the primary and redundant fibers positioned at first and second preselected locations, respectively, within the field of view of the communications optical member, the second end of the primary fiber coupled to the primary communications electronics and the first end of the redundant fiber coupled to the redundant communications electronics, each of the fibers operative to propagate a signal incident upon the first end of the fiber to the respective communications electronics coupled to the second end of the fiber;
said first steering mechanism operative to simultaneously direct the acquisition/track and communications signals towards the acquisition/track and communications optical members at preselected angles, respectively, so that the acquisition/track signal focuses on the primary track sensor when the communications signal focuses at the first preselected location and illuminates the first end of the first fiber, the first steering mechanism being operative to change the angle at which the acquisition/track and communications signals are incident upon the acquisition/track and communications optical members, respectively, so that the communications signal is focused at the second preselected location and illuminate the second end of the second fiber when the acquisition/track signal is focused on the redundant track sensor.

4. The system of claim 1, wherein said means to produce primary and redundant collimated signals comprises a transmit optical member, primary and redundant transmit fibers, and primary and redundant transmit electronics, said transmit optical member having a focal plane, each of the transmit fibers having a first and a second end, said first end of said primary and redundant fibers positioned at first and second preselected locations, respectively, within the focal plane of the transmit optical member, said second end of the primary and redundant transmit fiber being optically coupled to the primary and redundant signal generators, respectively, said primary and redundant transmit fibers operative to transport said primary and redundant generated transmit signals to said first and second preselected locations and radiate said generated transmit signals from the first and second preselected locations, respectively, said transmit optical member positioned so that the primary and redundant radiated transmit signals illuminate the transmit optical member from the first and second preselected locations, respectively, the transmit optical member configured to collimated the primary and redundant radiated transmit signals in first and second directions correspondingly related to the first and second preselected locations, respectively.

5. The system of claim 4, wherein said second steering mechanism is a point ahead mechanism.

6. The system of claim 5, further comprising a calibration mechanism positioned to receive a portion of a selected one of the collimated transmit signals during a calibration cycle and direct a first portion of the transmit signal into said acquisition/track path, said acquisition/track path configured to use the first portion of the transmit signal to calibrate the point ahead mechanism.

7. The system of claim 1, wherein said first steering mechanism comprises a fine track mechanism and said second steering mechanism comprises a point ahead mechanism, said system further comprising a transmit/receive beamsplitter positioned to intercept the redirected collimated transmit signal and direct the intercepted collimated transmit signal towards the fine track mechanism, said point ahead mechanism and said fine track mechanism together positionable to direct the intercepted collimated transmit signal towards the destination location.

8. The system of claim 7, further comprising a calibration mechanism positioned to receive a portion of the intercepted collimated transmit signal from the point ahead mechanism during a calibration cycle, said portion being the calibration signal, said calibration mechanism operative to receive said calibration signal from said point ahead mechanism at a first angle correspondingly related to the position of the point ahead mechanism,
said calibration mechanism operative to direct the calibration signal towards said acquisition/track beamsplitter at a second angle correspondingly related to the first angle, said acquisition/track beamsplitter operative to divide the calibration signal into an acquisition/track calibration signal and a remainder signal and direct said acquisition/track calibration signal towards said acquisition/track optical member at a third angle correspondingly related to said second angle, said acquisition/track optical member operable to focus said calibration signal at a position correspondingly related to said second angle, whereby said second angle is changeable by selectively positioning said point ahead mechanism,
said point ahead mechanism being positioned to selectively focus said calibration signal on a center of each sensor a position of the point ahead mechanism being measured for each focusing of said calibration signal,
said positions being useable by said fine track mechanism to focus said acquisition/track signal onto a selected one of said sensors.

9. A satellite system for acquiring, receiving and tracking a received signal comprising:
an acquisition/track beamsplitter configured to divide the received signal into an acquisition/track signal and a communications signal;
an acquisition/tracking path having an acquisition/track optical member, a primary acquisition sensor and a primary tracking sensor, said optical member having a field of view over which the optical member can focus and operable to focus a signal which is incident upon the optical member at an incident angle at a position within the field of view correspondingly related to the incident angle of the signal, said primary acquisition and track sensors positioned within the field of view of the optical member;
a communications path configured to receive said communications signal;
a steering mechanism positioned to intercept said acquisition/track signal and direct the acquisition/track signal towards the acquisition/track optical member at a preselected first incident angle so that the acquisition/track signal is focused by the acquisition/track optical member onto the primary acquisition sensor, the steering mechanism configured to change the angle at which the acquisition/track signal is incident upon the optical member and redirect the acquisition/track signal at a preselected second incident angle so that acquisition/track signal focuses onto the tracking sensor.

10. The system of claim 9, further comprising:
a redundant acquisition sensor and a redundant tracking sensor positioned within the optical member field of view, the redirecting means operable to selectively redirect the incident angle at which the acquisition/track signal is incident upon the acquisition/track optical member so that the acquisition/track signal can be focused by the acquisition/track optical member onto any selected one of the tracking and acquisition sensors.

11. The system of claim 10, wherein the communications path comprises:
a communications optical member having a field of view over which the communications optical member can focus and operable to focus a signal which is incident upon the communications optical member at an incident angle at a position within the field of view correspondingly related to the incident angle of the signal;
primary and redundant communications electronics; and,
primary and redundant optical fibers each having a first and a second end;
the first end of the primary and redundant fibers positioned at first and second preselected locations, respectively, within the field of view of the receive optical member, the second end of the primary fiber coupled to the primary communications electronics and the first end of the redundant fiber coupled to the redundant receive electronics, each of the fibers operative to propagate a signal incident upon the first end of the fiber to the communications electronics which are coupled to the second end of the fiber;
said steering mechanism positioned to direct the communications signal towards the communications optical member at a selectable first incident angle so that the communications optical member focuses the communications signal at the first preselected location and illuminates the first end of the first fiber, the steering mechanism operable to change the angle at which the communications signals is incident upon the communications optical member and redirect the communications signal at a preselected second incident angle so that the communications signal is focused by the communications optical member at the second preselected location and illuminates the second end of the second fiber;
said steering mechanism configured so that said communications signal is focused on said first end of said primary fiber when said acquisition/track signal is focused on said primary track sensor and said communications signal is focused on said first end of said redundant fiber when said acquisition/track signal is focused on said redundant track sensor.

12. The system of claim 9, wherein the communications path comprises:
a communications optical member having a field of view over which the communications optical member can focus and operable to focus a signal which is incident upon the communications optical member at an incident angle at a position within the field of view correspondingly to the incident angle of the signal;
primary and redundant communications electronics; and,
primary and redundant optical fibers each having a first and a second end;
the first end of the primary and redundant fibers positioned at first and second preselected locations, respectively, within the field of view of the communications optical member, the second end of the primary fiber coupled to the primary communications electronics and the first end of the redundant fiber coupled to the redundant communications electronics, each of the fibers operative to propagate a signal incident upon the first end of the fiber to the communications electronics which are coupled to the second end of the fiber;
said steering mechanism operable to direct the communications signal towards the communications optical member at a selectable first incident angle so that the communications optical member focuses the communications signal at the first preselected location and illuminates the first end of the first fiber, the steering mechanism configured to selectively change the angle at which the communications signal is incident upon the communications optical member and redirect the communications signal at a preselected second incident angle so that the communications signal is focused by the communications optical member at the second preselected location and illuminate the second end of the second fiber.

13. The system of claim 12, further comprising a feedback mechanism coupled to each of the sensors and to the first steering mechanism, each of the sensors operative to determine a position of the focused the acquisition/track signal and generate a corresponding control signal, the feedback mechanism operative to supply the control signal to the steering mechanism which is responsive to the control signal and operative to redirect the incident angle at which the acquisition/track signal is incident upon the acquisition/track optical member.

14. A satellite receive system for acquiring and tracking a received signal comprising:
an acquisition/track beamsplitter positioned to intercept the received signal and split the received signal into a communications signal and an acquisition/track signal;
an acquisition/track optical member having a field of view over which the optical member can focus and operable to focus a signal which is incident upon the optical member at an incident angle at a position within the field of view correspondingly related to the incident angle of the signal;
a primary acquisition sensor positioned within the field of view;
a primary track sensor positioned within the field of view;
a steering mechanism positioned to direct the acquisition/track signal towards the optical member at a preselected first incident angle so that the acquisition/track signal is focused by the optical member onto the primary acquisition sensor, the steering mechanism operable to change the angle at which the acquisition/track signal is incident upon the acquisition/track optical member and redirect the acquisition/track signal at a preselected second incident angle so that the acquisition/track signal is focused by the acquisition/track optical member onto the track sensor.

15. A method for acquiring and tracking a received signal comprising the steps of:
dividing the received signal into an acquisition/track and a communications signal;
providing an acquisition/track optical member having a field of view over which the optical member can focus;
positioning an acquisition sensor and a track sensor at preselected locations within the field of view of the optical member;
directing the acquisition/track signal to illuminate the optical member at a preselected first angle so that the acquisition/track signal focuses onto the acquisition sensor;
redirecting the angle of the acquisition/track signal to illuminate the optical member at a preselected second angle so that the acquisition/track signal focuses onto the track sensor.

16. The method of claim 15, further comprising:
positioning redundant acquisition and track sensors within the field of view of the optical member, wherein directing the acquisition/track signal to illuminate the optical member at a preselected first angle so that the acquisition/track signal focuses onto the acquisition sensor comprises directing the acquisition/track signal to illuminate the optical member at a preselected first angle so that the acquisition/track signal focuses a selected one of the acquisition sensors; and redirecting the acquisition/track signal to illuminate the optical member at a preselected second angle so that the acquisition/track signal focuses onto the track sensor comprises redirecting the acquisition/track signal to illuminate the optical member at a preselected second angle so that the acquisition/track signal focuses onto a selected one of the track sensors.

17. A method of claim 16 further comprising:
providing a communications optical member having a field of view over which the optical member can focus;
positioning a first end of a primary and a redundant optical fiber at first and second preselected locations, respectively, within the field of view of the optical member;
coupling a second end of the primary optical fiber to primary communications electronics;
coupling a second end of the redundant -optical fiber to redundant communications electronics;
directing the communications signal to illuminate the communications optical member at a preselected first angle so that the communications signal focuses on the first end of the primary optical fiber so as to propagate through the primary optical fiber to the primary communications electronics; and,
redirecting the communications signal to illuminate the communications optical member at a preselected second angle so that the communications signal focuses on the first end of the redundant optical fiber so as to propagate in the redundant optical fiber to the redundant communications electronics.

18. A method for receiving, acquiring and tracking a received signal, and transmitting a collimated transmit signal towards a preselected destination location comprising:
dividing the received signal into an acquisition/track signal and a communications signal;
providing an acquisition/track optical member having a field of view over which the acquisition/track optical member can focus;
positioning an acquisition sensor and a track sensor at preselected locations within the field of view of the acquisition/track optical member;
directing the acquisition/track signal to illuminate the optical member at a preselected first angle so that the acquisition/track signal focuses onto the acquisition sensor;
redirecting the acquisition/track signal to illuminate the optical member at a preselected second angle so that the acquisition/track signal is focuses onto the track sensor;
providing a communications optical member having a field of view over which the communications optical member can focus;
positioning a first end of a primary and a redundant optical fiber at first and second preselected locations, respectively, within the field of view of the communications optical member;
coupling a second end of the primary optical fiber to primary communications electronics;
coupling a second end of the redundant optical fiber to redundant communications electronics;
directing the communications signal to illuminate the communications optical member at a preselected first angle selected so that the communications signal is focuses onto the first end of the primary optical fiber so as to propagate through the primary optical fiber to the primary communications electronics; and,
redirecting the communications signal to illuminate the optical member at a preselected second angle selected so that the communications signal focuses onto the first end of the redundant optical fiber so as to propagate in the redundant optical fiber to the redundant communications electronics;
selectively generating primary and redundant generated transmit signals;
radiating the primary and redundant generated transmit signals;
illuminating a transmit optical member with the primary and redundant radiated transmit signals;
collimating the primary and redundant radiated transmit signals in first and second directions, respectively;
redirecting the primary collimated transmit signal towards the preselected destination locations; and,
switching from redirecting the primary collimated transmit signal towards the preselected destination location to redirecting the redundant collimated transmit signal towards the preselected destination location.
